# EUROPÄISCHE PATENTANMELDUNG

(11) **EP 1 605 340 A2**
(43) Veröffentlichungstag der Anmeldung: **14.12.2005**
(21) Anmeldenummer: 05010108.8
(22) Anmeldetag: 10.05.2005
(51) Int. Cl.: G06F 3/033

(54) **Computer-Maus mit integrierter Telefonfunktion**

(30) Priorität: 13.05.2004 DE 102004023845
(71) Anmelder: Web. De AG, 76227 Karlsruhe (DE)
(72) Erfinder: Cotte, Pierre-Alain, 76131 Karlsruhe (DE)
(74) Vertreter: Schultenkämper, Johannes

(57) **Zusammenfassung**

Vorgeschlagen wird eine Computer-Maus (100) mit integrierter Telefonfunktion und ein Verfahren zum Betreiben dieser Maus. Die Maus (100) enthält sowohl Steuerungsmittel (L, D, 110) zur Steuerung eines Rechners als auch Telekommunikationsmittel (101, 102, 103, 104) zur Durchführung von Telefonaten, wobei zur Aktivierung der Telefonfunktion die Steuerungsmittel (D, L, 110), welche den Maus-Cursor ansteuern, ein Aktivieren zumindest eines Teils der Telekommunikationsmittel (101, 102) veranlassen.

Es wird automatisch zwischen dem Normalbetrieb und einem Telefonbetrieb umgeschaltet. Der Benutzer muss nicht manuell umschalten. Die Maus ist vorzugsweise eine optischen Maus (100), bei der die zu den Steuermitteln gehörende Lichtdiode (D) keine Lichtreflektion mehr detektiert, wenn der Benutzer die Maus (100) von der Unterlage (10) abhebt (off-hook-Zustand). In diesem Fall wird automatisch in den Telefonbetrieb umgeschaltet, d.h. werden das Mikrofon (101) und der Ohrhörer (102) aktiv geschaltet. Ebenso kann auch auf dem Rechner eine Telefonapplikation automatisch gestartet werden.

## Beschreibung

Die Erfindung betrifft eine Computer-Maus mit integrierter Telefonfunktion gemäß dem Oberbegriff des Anspruch 1 sowie ein Verfahren zum Steuern eines Rechners gemäß dem Oberbegriff des nebengeordneten Anspruchs.

Computer-Mäuse sind neben den Computer-Tastaturen die wichtigsten Bedien- und Steuerungsmittel für Benutzer von Rechnern (Computern), insbesondere von Personal-Computern wie PC und Laptop. Auf diesen Computern laufen in der Regel Software-Anwendungen, die eine auf dem Bildschirm dargestellte Bedienoberfläche mit einem Cursor aufweisen. Den Cursor kann der Benutzer mittels einer herkömmlichen Computer-Maus -im weiteren auch kurz Maus genanntsteuern. Dazu bewegt der Benutzer manuell die Maus auf einer Unterlage, z.B. auf einem sogenannten Mousepad oder einfach auf dem Schreibtisch selbst, und die Bewegung wird innerhalb der Maus in elektrische Steuersignale umgesetzt. Diese Signale gelangen über ein Anschlusskabel oder drahtlos über eine Funk- oder Infrarotverbindung zu dem Computer und bewirken dort eine entsprechende Bewegung des Cursors auf der Bedienoberfläche. Die herkömmlichen Mäuse haben zumindest noch eine Taste, die der Benutzer betätigen kann, wodurch ein Steuersignal erzeugt wird, das bestimmte Software-Schritte auslöst, wie z.B. das Starten einer Applikation (Anwenderprogramm wie z.B. Textverarbeitung oder Zeichenprogramm), eines Programmteils (Drucken eines Dokuments) oder eines einzelnen Programmschritts (Markieren einer Textstelle). Somit kann der Benutzer mittels der Maus verschiedenste Aktivitäten veranlassen und durchführen. Eine sehr wichtige Applikation, die hauptsächlich mittels der Maus gesteuert wird, sind Browser, die den Zugriff und das Surfen im Internet ermöglichen. In diesem Zusammenhang sind auch Internet-Applikationen für die Kommunikation zu nennen, insbesondere für Email, Instant Messaging und Internet-Telefonie.

Bei der Internet-Telefonie, der sog. VoIP (Voice over Internet Protocol), benötigt der Benutzer auch noch Telekommunikationsmittel, wie Mikrofon und Ohrhörer, die üblicherweise als ein am Kopf tragbares Sprechgeschirr, ein sogenanntes Headset, ausgebildet sind. Diese zusätzliche Sprechgeschirr muss ebenfalls an den Computer angeschlossen werden und sein Tragen wird nicht selten als lästig empfunden.

Aus der DE-U1-20301184 ist eine sog. Handy-Computer-Maus, also eine Kombination aus Mobiltelefon und Computer-Maus, bekannt. Dort werden in das Gehäuse eines Mobiltelefon auch die Maus-Funktionsbauteile, insbesondere ein optischer oder mechanischer Bewegungssensor, eingebaut, wobei einige Tasten des Mobiltelefons auch als Maustasten fungieren. Das Mobiltelefon (Handy) ist über seine Funkschnittstelle oder eine andere Schnittstelle (z.B. USB, Infrarot) mit einem Computer verbunden. Somit kann durch Bewegen des Mobiltelefons auf einer Unterlage der Cursor eines Computers gesteuert werden. Das Mobiltelefon hat also zwei Betriebsmodi, nämlich Telfonbetrieb und Mausbetrieb. Wie zwischen diesen Betriebsmodi umgeschaltet wird, ist dort nicht näher beschrieben.

In der Zusammenfassung zum Patent JP-08-079353 wird eine Maus-Telefon-Kombination beschrieben, bei der zum Umschalten in den Telefonbetrieb ein Bereich mit einem mechanischen Schalter (sog. Hook switch section) vorgesehen ist.

In dem Patent US 5,847,695 wird eine mechanische Maus mit Telefonfunktion beschrieben, bei der auch ein mechanischer Umschalter (sog. off-hook switch) zum Einschalten einer Telefonfunktion vorgesehen ist.

Aus der US-6285354 B1 ist eine Kombination aus Computer-Maus und Telefonhörer bekannt, bei der sowohl Mausfunktionen als auch Telefonfunktionen in einem Gehäuse integriert sind. Es handelt sich also um eine spezielle Computer-Maus mit integrierter Telefonfunktion. Die Maus ist über Kabel mit dem Computer verbunden und hat ein aufklappbares Gehäuse, in dem ein Mikrofon, ein Ohrhörer und eine Telefontastatur untergebracht sind. Zum Telefonieren muss der Benutzer das Gehäuse aufklappen und es wie einen normalen Telefon-Sprechhörer an seinen Kopf halten. Erst dann kann der Benutzer durch manuelle Bedienung der Tastatur ein Telefonat veranlassen oder einen eingehenden Anruf entgegen nehmen. Die Konstruktion ist wegen des Klappmechanismus aufwendig gestaltet. Das Klappscharnier muss stabil ausgeführt sein, damit es bei der Benutzung der Maus nicht beschädigt oder gar zerstört wird. Die Telefonfunktion wird manuell eingeschaltet.

Aufgabe der Erfindung ist es, eine Computer-Maus der eingangs genannten Art vorzustellen, die eine einfache Bedienung für das Steuern eines Rechners wie auch für die Durchführung von Telefonaten ermöglicht. Außerdem soll ein Verfahren zum Steuern eines Rechners und zur Durchführung von Telefonaten mittels einer solchen Computer-Maus vorgestellt werden.

Gelöst wird die Aufgabe durch eine Computer-Maus mit den Merkmalen des Anspruch 1 bzw. durch ein Verfahren mit den Merkmalen des nebengeordneten Anspruchs.

Demnach wird vorgeschlagen, dass zur Aktivierung der Telefonfunktion die Steuerungsmittel, welche zur Ansteuerung des Maus-Cursors vorgesehen sind, ein Aktivieren zumindest eines Teils der Telekommunikationsmittel veranlassen.

Damit bewirken die Steuerungsmittel für den Maus-Cursor, dass automatisch umgeschaltet wird zwischen dem Normalbetrieb der Maus, bei dem sie zur Steuerung des Rechners benutzt werden kann, und einem Telefonbetrieb, bei dem die Maus zur Durchführung eines Telefonats benutzt werden kann. Der Benutzer muss nicht manuell die Umschaltung veranlassen. Es reicht schon aus, wenn im Normalbetrieb der Maus ein bestimmter, insbesondere abnormaler, Zustand auftritt, den die Steuerungsmittel erkennen und zum Anlass nehmen, mindestens einen Teil der Telekommunikationsmittel zu aktivieren. So wird z.B. im Fall einer optischen Maus von den Steuerungsmitteln sofort der Zustand erkannt, wenn der Benutzer die Maus von der Unterlage abhebt, weil er die Maus zum Telefonieren an sein Ohr führen will. In diesem Fall detektiert die zu den Steuermitteln gehörende Lichtdiode keine Lichtreflektion mehr und es wird die Maus automatisch in den Telefonbetrieb umgeschaltet. Dazu werden z.B. das Mikrofon und der Ohrhörer aktiv geschaltet. Ebenso kann auch auf dem Rechner die Telefonapplikation automatisch gestartet werden. Es wird also automatisch ein Zustand erkannt, der bei einem normalen Telefon dem Zustand des abgenommenen Telefonhörers (off-hook) entspricht, und es wird automatisch eine Aktivierung der Telefonfunktion veranlasst. Dem Benutzer wird somit eine sehr einfach zu bedienende und komfortable Computer-Maus mit integrierter Telefonfunktion zur Verfügung gestellt.

Vorteilhafte Ausgestaltungen der Erfindung ergeben sich aus den Unteransprüchen.

Demnach umfassen die Steuerungsmittel vorzugsweise eine mechanische und/optische optische Bewegungserkennung, die erkennt, wenn ein zum Normalbetrieb der Maus abnormaler Zustand auftritt, der dem Zustand eines abgenommenen Telfonhörers (off-hook) entspricht. In diesem Zusammenhang wird eine optische Bewegungserkennung mittels lichtemittierender und - detektierende Bauteile und einer damit verbundener Steuerung vorgeschlagen, so dass ein abnormaler Zustand erkannt wird, wenn kein von dem licht-emittierenden Bauteil (z.B. Laserdiode) abgestrahltes Licht auf das licht-detektierende Bauteil (Lichtsensor) auftrifft und detektiert wird. Im Falle einer sog. optischen Maus wird ein abnormaler Zustand erkannt, sobald die Maus von der Unterlage gehoben wird und keine Lichtreflektion mehr bei dem Lichtsensor eintrifft. Dann schaltet die Steuerung sofort vom Normalmodus in den Telefonmodus um. Diese Ausgestaltung der Erfindung erlaubt eine sehr zuverlässige Funktionsweise und eine sehr preiswerte Realisierung. Zur Bewegungserkennung können andere optische Bauteile, wie z.B. Leuchtdioden und Lichtempfindliche Transistoren oder dergleichen eingesetzt werden. Alternativ oder zusätzlich dazu können auch mechanische Bauteile zur Bewegungserkennung, wie z.B. Druck- oder Lagesensoren eingesetzt werden. Außerdem können auch andere Sensoren, Wärmesensoren, insbesondere Infrarotsensoren, sowie Kontakt- oder Feuchtigkeitssensoren eingesetzt werden.

Die Erfindung und die sich daraus ergebenden Vorteile werden nun näher anhand von Ausführungsbeispielen beschrieben. Dabei wird auf folgende schematischen Zeichnungen Bezug genommen:
- Fig. 1,: die eine erste Ausführungsform der erfindungsgemäßen Computermaus mit integriertem Telefon zeigt;
- Fig. 2,: die eine zweite Ausführungsform der erfindungsgemäßen Computermaus mit integriertem Telefon zeigt; und
- Fig. 3,: die die Computermaus gemäß Fig. 2, wie sie als drahtloses Telefon eingesetzt wird, zeigt.

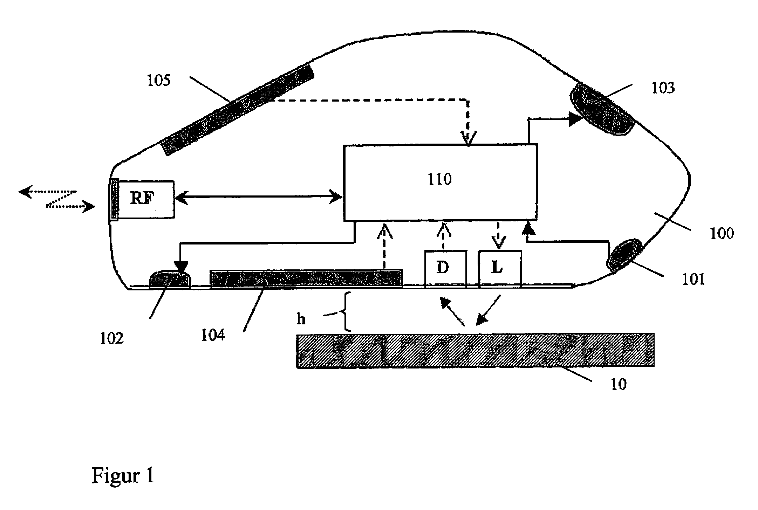

In Fig. 1 ist eine erste Ausführungsform der erfindungsgemäßen Computermaus 100 mit integrierter Telefonfunktion dargestellt. Die Maus 100 besitzt sowohl Steuerungsmittel zur Steuerung eines Rechners, insbesondere zur Steuerung eines Cursors, sowie Telekommunikationsmittel zur Durchführung von Telefonaten, insbesondere von sogenannten VoIP-Telefonaten (Voice over Internet Protocol).

Im Normalbetrieb wird die Maus 100 vom Benutzer bewegt und gleitet auf einer Unterlage 10. Die Steuerungsmittel umfassen auch eine optische Bewegungserkennung (Abtastung durch Laser L und Detektor D), welche Steuersignale für den Cursor des PC (nicht dargestellt) erzeugt. Im einzelnen verfügt die Maus 100 über eine Laserdiode L und einen optischen Sensor D sowie über eine Steuerung 110 zur Signalverarbeitung und zum Austausch von Steuerungsdaten mit dem Rechner, der z.B. ein Personal Computer (PC) ist. Im wesentlichen wird durch die Bewegung der Maus eine Steuerung des Cursors auf dem Bildschirm des PC gesteuert. Wie es die Pfeile in Fig. 1 andeuten, sendet der Laser L Licht aus, das von der Unterlage 10 reflektiert wird und anschließend von der Detektor-Diode D erfasst wird.

Die in Fig. 1 dargestellte optische Bewegungserkennung zur Ansteuerung des Cursors kann auch durch andere, insbesondere durch eine mechanische Bewegungserkennung ersetzt sein, wie etwa durch einen Kugelmechanismus mit Potentiometern. Besonders vorteilhaft ist aber die dargestellte optische Erkennung.

Die Maus 100 verfügt auch über mindestens ein Bedienmittel und/oder Tastelement, das der Benutzer mit seinen Fingern bedient, um Aktionen wie Clicken oder Scrolling auszulösen. Dazu sind herkömmlicherweise Maustasten bzw. Rollrad vorgesehen. Es können aber auch andere sensitive Bedienmittel, wie etwa ein sensitives Berührungsfeld, ein sog. Touchpad, verwendet werden.

In diesem Beispiel verfügt die Maus 100 auch über ein solches Touchpad 105. Das hat den Vorteil, dass der Benutzer durch Antippen des Touchpads 105 einzelne Clicks bewirken kann wie auch durch Fingerbewegungen auf der Oberfläche des Touchpads den Cursor bewegen oder auch Scrolling durchführen kann. Mit dem Touchpad 105 können also die wesentlichen Steuersignale für den Maus-Cursor erzeugt werden. Somit kann der PC auch gesteuert werden, wenn der Benutzer die Maus selbst nicht bewegt oder bewegen kann.

Die Anbindung der Maus an den Computer erfolgt entweder über ein Kabel oder auch kabellos. In diesem Beispiel besitzt die Maus 100 ein Funkteil RF nach dem Bluetooth-Standard, über das eine kabellose Verbindung zum PC besteht. Anstelle einer solchen Funk-Schnittstelle kann natürlich auch eine Infrarot-Schnittstelle verwendet werden. Die verschiedenen Funktionen der Maus 100 werden mittels einer zentralen Steuerung 110 ausgeführt, die über das Funkteil RF Steuerungsdaten mit dem PC austauscht. Weitere Bauteile, wie etwa A/D-Wandler und D/A-Wandler oder Spannungsversorgung mit Batterie, sind zur Vereinfachung der Fig. 1 nicht dargestellt.

Erfindungsgemäß besitzt die Maus 100 nun auch Telekommunikationsmittel, insbesondere eine Telefoneinrichtung, so dass die Maus 100 auch als Telefon benutzt werden kann. Die Telefoneinrichtung besteht zumindest aus einem Mikrofon 101 und/oder einem Ohrhörer 102. Zusätzlich kann die Maus, so wie es die Fig. 1 zeigt, auch einen Lautsprecher 103 und eine alphanumerische Telefontastatur 104 enthalten. Damit kann die Maus 100 in vollem Umfang als Telefon einschließlich Freisprechen genutzt werden.

Zum Telefonieren wird beispielsweise als Telefonverbindung eine VoIP-Verbindung vom PC des Benutzers über das Internet zu einem anderen PC hergestellt, der ebenfalls ein VoIP client ist und den der angerufene Telekommunikationspartner nutzt. Ebenso könnte mittels eines IP/PSTN Gateways auch eine Telefonverbindung zu einem PSTN-Endgerät hergestellt werden. Zur Steuerung der Telekommunikation wird besonders bevorzugt eine Kommunikationswebsite verwendet, wie sie in der WO 03/094469 A2 beschrieben wird.

Um vom Normalbetrieb der Maus 100 in einen Telefonbetriebsmodus umzuschalten, werden erfindungsgemäß die bereits vorhandenen Steuerungsmittel genutzt, die üblicherweise nur zur Cursor-Steuerung eingesetzt werden, also in dem hier gezeigten Beispiel die optischen Abtastungsmittel (Laser L und Detektor D) sowie die Steuerung 110:

Im Normalbetrieb befindet sich die Maus 100 zunächst auf der Unterlage 10 (z.B. Schreibtischfläche), so dass das vom Laser L abgestrahlte Licht von der Oberfläche reflektiert wird und zum Detektor D gelangt. Entfernt man nun die Maus 100 von der Oberfläche 10, so gelangt ab einem gewissen Abstand h kein Licht mehr auf den Detektor D. Das wiederum erkennt die Steuerung 110 und schaltet die Maus 100 vom Normalbetrieb in den Telefonbetrieb um. Damit wird also beim Abheben der Maus 100 automatisch die Telefonfunktion aktiviert.

Dies geschieht im wesentlichen dadurch, dass die Steuerung 110 bei Erkennung des Abhebens einen abnormalen Zustand erkennt und die Telefoneinrichtung, also das Mikrofon 101, der Ohrhörer 102 und die Telefontastatur 104 aktiv schaltet. Außerdem kann die Steuerung auch den Lautsprecher 103 aktiv schalten. Das Aktivieren der einzelnen Bauteile kann auch in Abhängigkeit von PC-Benutzer gesteuerten Funktionen durchgeführt werden.

Beispielsweise werden die Bauteile der Telefoneinrichtung dann aktiv geschaltet, wenn der Benutzer eine Telekommunikationsprogramm auf dem PC startet und die Maus von der Unterlage abhebt.

Es ist aber auch möglich, dass die Telekommunikationsprogramme von der Steuerung 110 aus gestartet oder zumindest beeinflusst werden, sobald das Abheben der Maus 100 erkannt wird. Damit kann z.B. eine VoiP-Applikation auf dem PC automatisch gestartet werden oder es können einzelne Prozesse, wie z.B. der Aufruf eines Kontaktmanagers, automatisch getriggert werden. Dadurch kann der Benutzer, der die Maus 100 von der Unterlage 10 (Schreibtisch) abhebt, sofort mit der Telekommunikation selbst beginnen.

Wenn die Steuerung 110 außerdem noch den Lautsprecher 103 automatisch oder auf Wunsch des Benutzers aktiv schaltet, wird sofort eine Freisprechfunktion bereit gestellt. Die Freisprechfunktion wird insbesondere dann eingeschaltet, wenn der Benutzer die Maus 100 auf dem Schreibtisch 10 belässt und per Mausklick die Telefonfunktion startet. Oder die Freisprechfunktion wird im Laufe eines Telefonats dann automatisch eingeschaltet, wenn der Benutzer die Maus wieder auf dem Schreibtisch ablegt. Während der Freisprechfunktion schaltet die Steuerung 110 lediglich das Mikrofon 101 und den Lautsprecher 103 aktiv, nicht aber zwingend auch den Ohrhörer und die Tastatur 104. Da sich das Mikrofon 101 an einer angeschrägten Seite und der Lautsprecher 103 auf der oberen Seite des Mausgehäuses befinden, ist eine optimale akustische Übertragung vom und zum Benutzer sicher gestellt.

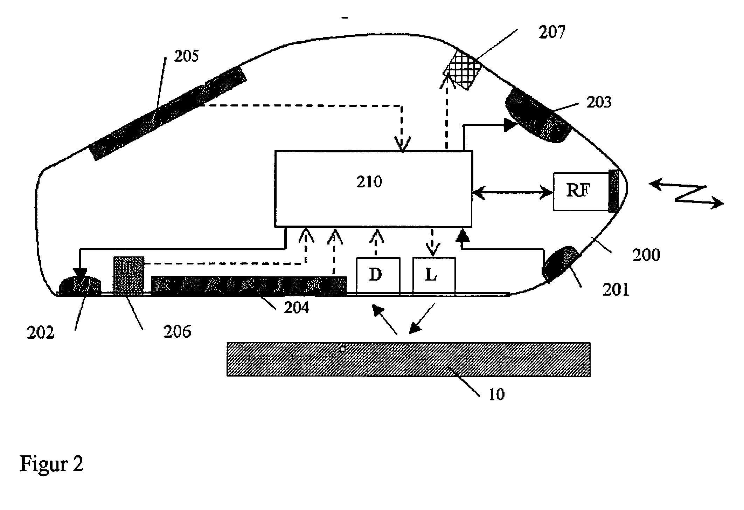

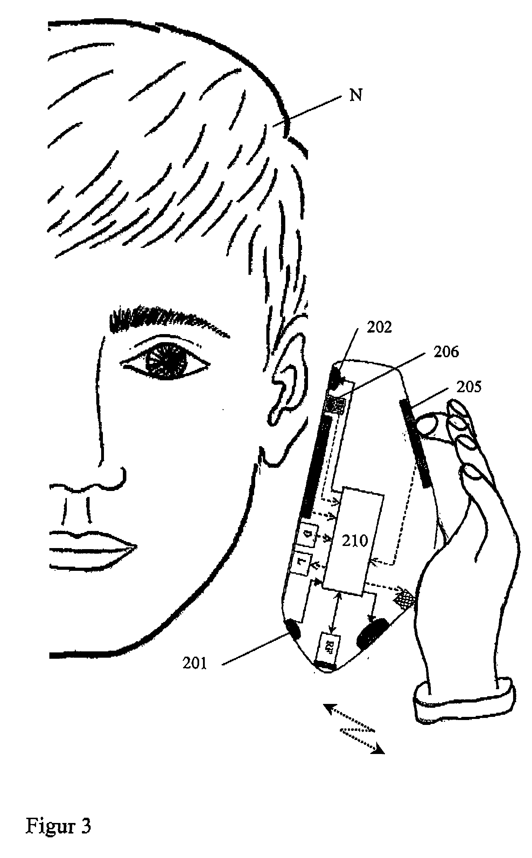

Die oben genannten Funktionen der Maus und weitere werden nun noch genauer anhand der Fig. 2 und 3 beschrieben. In der Fig. 2 ist zunächst der Aufbau einer zweiten Ausführungsform einer erfindungsgemäßen Maus 200 mit integriertem Telefon dargestellt. Im Unterschied zur Maus aus der Fig. 1 hat diese Maus 200 noch folgende weiteren Bauteile und Funktionen:

Die Maus 200 hat u.a. auch einen Infrarotsensor 206, mit dem die Nähe bzw. die Berührung zu einer Person erkannt wird. Anhand des Sensors 206 stellt die Steuerung 110 fest, ob sich die Maus 200 am Kopf des Benutzers befindet und in den Telefonbetrieb geschaltet werden soll. Damit wird mit einfachen Mitteln eine sehr sichere Funktion realisiert, um das Abheben der Maus 200 zu erkennen. Diese Abhebe-Erkennung kann zusätzlich oder alternativ zu der optischen Erkennung (s. Fig. 1) erfolgen. Anstelle von Wärmesensoren (Infrarotsensoren) können auch andere Sensoren, wie beispielsweise kapazitive Sensoren, ohmnsche Widerstandssensoren oder Lagesensoren, eingesetzt werden. Dadurch werden z.B. Berührungskontakte oder Lagepositionen erkannt und erkannt, ob die Maus vom Normalmodus in den Telefonmodus umgeschaltet werden soll.

Die in der Fig. 2 dargestellte Maus 200 weist zusätzlich eine Signallampe in Form einer LED 207 auf, die sich auf der Oberseite des Mausgehäuses befindet und die bei einem eingehenden Anruf aufleuchtet und/oder blinkt. Bei der gezeigten Maus 200 befindet sich außerdem das Funkteil RF am hinteren Ende der Maus und nicht am vorderen entgegen gesetzten Ende, wie es in der Fig. 1 dargestellt ist. Diese andere Anordnung sowie auch die weiteren Bauteile bieten besondere Vorteile für die Benutzung der Maus 200 als Telefon.

Dies wird nun anhand der Fig. 3, die die Computermaus 200 im Telefonbetrieb zeigt, genau beschrieben:

Ausgehend vom Normalbetrieb, verwendet der Benutzer N die Maus 200 zunächst in bekannter Weise zur drahtlosen Steuerung seines Computers. Will der Benutzer N nun einen Kommunikationspartner anrufen, so hebt der Benutzer N zunächst die Maus 200 von der Unterlage (Schreibtisch) ab und führt die Maus 200 an sein Ohr. Der IR-Sensor 206 erfasst die vom Kopf des Benutzers N abgestrahlte Wärme und übermittelt ein Signal an die Steuerung 210. Die Steuerung 210 stellt nun fest, dass die Maus 200 abgehoben wurde und schaltet dementsprechend automatisch die Maus 200 in den Telefonbetrieb um. Im Vergleich zum Beispiel nach der Fig. 1 erfolgt hier im Beispiel der Fig. 2 das Umschalten erst dann, wenn der Benutzer die Maus 200 an sein Ohr geführt hat, d.h. wenn er tatsächlich die typische Telefonierhaltung eingenommen hat.

Bevor der Benutzer N die Maus an sein Ohr hält, kann er die auf der Unterseite des Mausgehäuses befindliche Telefontastatur 204 benutzen und dort die Telefonnummer des gewünschten Gesprächspartners direkt eintippen. Sobald der Benutzer den Ohrhörer 202 an sein Ohr hält, befindet sich das Mikrofon 201 in unmittelbarer Nähe seines Mundes. Somit kann die Maus 200 wie ein gewöhnlicher Telefonhörer benutzt werden.

Dadurch dass aber das Funkteil RF sich am unteren Ende der Maus 200 befindet, strahlt es nicht in direkter Nähe des Kopfes ab. Die Funkstrahlenbelastung des Benutzers N wird also minimal gehalten. Auch wird der Abstand zwischen Funkteil RF und PC etwas verringert, was der. Funkübertragung zu Gute kommt.

Durch die Anordnung des Berührungsfeldes (Touchpad) 205 auf der Oberseite der Maus 200 ergibt sich noch der folgende Vorteil: Während der Benutzer N telefoniert, kann er über das Touchpad 205 gleichzeitig seinen Computer bedienen. Damit kann er während des Telefonats z.B. einen Browser bedienen und im WWW surfen oder etwa ein Präsentationsprogramm oder ein Datenbankprogramm bedienen, um nach Informationen zu suchen, auf die er während des Telefonats Zugriff haben möchte.

Alternativ oder zusätzlich zum Touchpad 205 könnte die PC-Bedienung auch über ein Mausrad, einen Navigationsstift (trackpoint), einen Trackball oder andere Bedienmittel erfolgen. Wesentlich ist, dass der Benutzer N die Maus 200 sowohl als Steuermittel für seinen Computer, insbesondere für die Cursor-Steuerung, nutzen kann wie auch gleichzeitig als Telefonhörer nutzen kann.

Wenn ein Touchpad eingesetzt wird, dann ist es auch möglich, dass die Berührfläche als elektrorestriktive (piezo-elektrische) Fläche ausgeführt ist. Zum einen kann solch ein Touchpad bei Berührung eine Steuerspannung für die Cursor-Steuerung erzeugen, zum anderen kann auch durch Anlegen oder Einspeisung von Signalspannungen die Oberfläche des Touchpads zu Schwingungen angeregt werden, so dass das Touchpad als Signalgeber dienen kann. Somit könnte bei eingehenden Rufen das Touchpad durch Einspeisung von Wechselspannungen oder pulsierenden Spannungen Rufsignale (Piepstöne) ähnlich einem Piezoelement erzeugen. Außerdem könnten bei weiterer Entwicklung eines solchen Touchpads auch Audiosignale erzeugt werden, so dass das Touchpad evtl. auch als Lautsprecher dienen könnte.

Wenn der Nutzer N sein Telefongespräch beendet hat, legt er die Maus 200 wieder auf die Unterlage. Dies wird dank des Sensors 206 automatisch erkannt und die Steuerung 210 schaltet die Telefonfunktion der Maus 200 automatisch ab. Statt dessen kann auch vorgesehen sein, falls das Telefongespräch nicht beendet wurde, dass beim Aufliegen der Maus 200 auf der Unterlage 10, die Steuerung 210 die Telefonfunktion nicht abschaltet, sondern auf eine Freisprechtelefonfunktion umschaltet. Das Telefonieren erfolgt dann über den Lautsprecher 203 und das Mikrofon 201. Der Nutzer N, der über die Freisprecheinrichtung telefoniert, kann die Maus dann auch gleichzeitig auf der Unterlage 10 hin und her bewegen und somit zur Steuerung seines Computers verwenden. So kann der Nutzer N auch beim Freisprechtelefonieren gleichzeitig über die Telefonfunktion und die Mausfunktion der Maus 200 verfügen.

Ein eingehender Anruf wird dem Nutzer N durch ein Aufleuchten der Signal-LED 207 angezeigt. Daraufhin kann der Nutzer N die Maus abheben und an den Kopf führen, um den Anruf entgegenzunehmen. Dies wird wiederum automatisch erkannt. Der Nutzer N kann anstelle des Abhebens aber auch die Freisprechfunktion aktivieren.

Mit der erfindungsgemäßen Maus ist es möglich, gleichzeitig zu telefonieren und einen Computer zu bedienen. Dies ist insbesondere dann möglich, wenn die Maus als Telefonhörer benutzt wird, d. h. wenn die Maus am Kopf des Nutzer N anliegt. In jeder Benutzungssituation verfügt der Nutzer der erfindungsgemäßen Maus also gleichzeitig über die Telefonfunktion und auch über die Mausfunktion. Dadurch ist die erfindungsgemäße Maus besonders vielseitig einsetzbar.

Die erfindungsgemäße Maus vereint in vorteilhafter Weise sowohl die Funktionalitäten einer Maus als auch die Funktionalitäten eines Telefons in vollem Umfang. Der Nutzer benötigt kein separates Telefon und keine separate Maus mehr. Daraus resultiert eine beträchtliche Platzersparnis.

Dadurch, dass die erfindungsgemäße Maus ein Abheben und Auflegen automatisch erkennt, wird die Bedienung beträchtlich vereinfacht. Der Nutzer muss nicht mehr umständlich selber die Telefonfunktion ein- und ausschalten.

## Patentansprüche

1. Computer-Maus (100, 200) mit integrierter Telefonfunktion, wobei die Maus (100, 200) sowohl Steuerungsmittel (L, D, 110) zur Ansteuerung des Cursors eines Rechners als auch Telekommunikationsmittel (101, 102, 103, 104) zur Durchführung von Telefonaten aufweist, **dadurch gekennzeichnet, dass**
zur Aktivierung der Telefonfunktion diese zur Ansteuerung des Cursors vorgesehenen Steuerungsmittel (D, L, 110) ein Aktivieren zumindest eines Teils der Telekommunikationsmittel (101, 102) veranlassen.

2. Computer-Maus (100, 200) nach Anspruch 1, **dadurch gekennzeichnet, dass** die Steuerungsmittel (D, L, 110) eine mechanische oder optische Bewegungserkennung umfassen, die erkennt, wenn ein zum Normalbetrieb der Maus abnormaler Zustand auftritt, der dem Zustand eines abgenommenen Telefonhörers (off-hook) entspricht.

3. Computer-Maus (100) nach Anspruch 2, **dadurch gekennzeichnet, dass** die Steuerungsmittel ein licht-emittierendes Bauteil (L), ein lichtdetektierendes Bauteil (D) und eine damit verbundene Steuerung (110) umfassen, die die Telefonfunktion der Maus (100) aktiviert, wenn das licht-detektierende Bauteil (D) kein von dem lichtemittierendem Bauteil (L) abgestrahltes Licht detektiert.

4. Computer-Maus nach Anspruch 2, **dadurch gekennzeichnet, dass** die Steuerungsmittel vom Normalbetrieb der Maus in einen Telefonbetrieb umschalten und/oder eine Telekommunikationsapplikation, insbesondere eine VoIP-Applikation zur Internet-Telefonie, starten, sobald kein Licht mehr detektiert wird.

5. Computer-Maus nach Anspruch 1, **dadurch gekennzeichnet, dass** die Steuerungsmittel (D, L, 110) der Maus (100, 200) auch ein manuelles Bedienmittel (105, 205) umfassen, das zumindest bei Aktivierung der Telefonfunktion durch den Benutzer zur Steuerung des Rechners, insbesondere zur Cursor-Steuerung, bedienbar ist.

6. Computer-Maus nach Anspruch 5, **dadurch gekennzeichnet, dass** das manuelle Bedienmittel ein Berührungsfeld (105, 205) ist.

7. Computer-Maus nach Anspruch 6, **dadurch gekennzeichnet, dass** das Berührungsfeld (105, 205) ein elektrorestriktives und/oder piezoelektrisches Bauteil ist, mittels dem die Steuerungsmittel (110) bei eingehenden Anrufen ein akustisches Signal, insbesondere ein Piepsen, erzeugen.

8. Computer-Maus (200) nach Anspruch 1, **dadurch gekennzeichnet, dass** die Maus (200) zusätzlich mindestens einen Sensor (206), insbesondere einen Infrarotsensor, umfasst, der mit den Steuerungsmitteln (210) verbunden ist, und dass die Steuerungsmittel (210) die Telefonfunktion der Maus (200) in Abhängigkeit von einem Sensorsignal des Sensors (206) aktiviert.

9. Computer-Maus (200) nach Anspruch 1, **dadurch gekennzeichnet, dass** die Telekommunikationsmittel zumindest ein Mikrofon (201) umfassen, das sich an einem Ende des Gehäuses der Maus (200) befindet, und dass die Maus (200) für eine Funkverbindung mit dem Rechner ein Funkteil (RF) umfasst, das sich an diesem Ende der Maus (200) befindet.

10. Verfahren zum Steuern eines Rechners mittels einer Computer-Maus (100, 200) mit integrierter Telefonfunktion, wobei die Maus (100, 200) als Steuerungsmittel (L, D, 110) zur Steuerung des Rechners und auch als Telekommunikationsmittel (101, 102, 103, 104) zur Durchführung von Telefonaten verwendet wird, die mittels eines auf dem Rechner laufenden Programms und/oder einer Applikation ausgeführt werden,
**dadurch gekennzeichnet, dass**
die Telefonfunktion aktiviert wird, indem die Steuerungsmittel (D, L, 110) der Maus (100, 200) veranlassen, dass zumindest ein Teil der Telekommunikationsmittel (101, 102) aktiviert wird.
